# EUROPEAN PATENT APPLICATION

(11) **EP 2 433 788 A1**
(43) Date of publication of application: **28.03.2012**
(21) Application number: 10178129.2
(22) Date of filing: 22.09.2010
(51) Int. Cl.: B32B 3/24, B65D 75/58, B26D 3/08, B32B 43/00

(54) **Pre-cut multilayer packaging material**

(71) Applicant: Amcor Flexibles Transpac N.V., 1935 Zaventem (BE)
(72) Inventor: Pilzecker, Jens, 31675 Bückeburg (DE); Thobe, Wilfried, 41238 Mönchengladbach (DE)
(74) Representative: pronovem

(57) **Abstract**

The present invention relates to a pre-cut multilayer packaging material comprising a plurality of successive entirely cut layers with the exception of one layer, said layer being only partially cut.

## Description

### Field of the Invention

The present invention discloses pre-cut multilayer packaging material comprising pre-cuts throughout more than one layer, and in particular multilayer polymeric films comprising paper and/or aluminium materials wherein all layers are completely cut except for one remaining layer, that is only partially cut.

The present invention also discloses a die-cutting process for the manufacturing of such pre-cut multilayer packaging materials.

### Definitions

In the present invention, the expressions "pre-cut", "incised", "slit", "pre-slit" or "scored" have the same signification.

Furthermore, in the present invention, the expression "multilayer material" is taken in its general sense and includes laminates with paper or aluminium, monolayer polymeric films comprising at least one additional layer such as a printing layer, primer layer, adhesive/seal layer-cold seal (CS) or release lacquer (RL) for instance.

### State of the Art

Pre-cut multilayer materials are well known by those skilled in the art of packaging. Nevertheless, the prior-art multilayer materials generally exhibit a pre-cut limited to one layer. Multilayer materials of superposed pre-cut monolayers obtained by the lamination of several pre-cut monolayers are also known in the art.

EP 1 817 165 discloses a multilayer film comprising a plurality of continuous, parallel, side-by-side incisions to facilitate the reduction of the breaking load, said incisions partially affecting the thickness of the most rigid layers and being obtained by removing material.

US 5,312,659 discloses a laminated film bag wherein the polyolefin resin film has score lines of a depth representing about 5% of the thickness of the film. In this case again, only one layer is scored.

US 4,903,841 discloses a pouch formed of a laminate sheet, one side of the heat-seatable plastic layers having a surface-roughened zone to ease the tearing of the pack. Here again, only one layer is pre-slit.

US 2005/0084636-A1 discloses a flexible multilayer packaging comprising tear-initiation areas and directional tear zones. In this case, only one layer of the multilayer film is scored, essentially by a laser score.

US 5,630,308 discloses a method for performing tear initiation and tear control by laser scoring. Only one layer of the multilayer film is scored.

EP 0 345 930 B1 discloses a closable pouch comprising a zone that is roughened with side-by-side incisions. Here again, only one layer of the multilayer film comprises those incisions.

EP 0 596 747 A1 discloses an easy open package comprising slits penetrating through one of the film layer but not the other layers. Said slits facilitate the rupture of all layers of the film when force is applied to affect an easy opening of the package made from the film.

### Aims of the Invention

The present invention aims to provide a pre-cut multilayer packaging material comprising a plurality of layers entirely cut with the exception of one layer, said layer being only partially cut.

Furthermore, a process for the manufacturing of such pre-cut multilayer packaging films is disclosed.

### Summary of the Invention

The present invention discloses a pre-cut multilayer packaging material comprising a plurality of successive, entirely cut layers with the exception of one layer, said layer being only partially cut.

Specific embodiments of the present invention disclose at least one or an appropriate combination of the following features:
- the tensile strength of the multilayer packaging material measured according to DIN EN ISO 527-1 and DIN EN ISO 527-3 is at least 25% lower than the tensile strength of the corresponding uncut multilayer packaging material;
- the multilayer packaging material is a laminate comprising at least one seal layer;
- the multilayer packaging material comprises at least one printing layer;
- the multilayer packaging material comprises at least one aluminium layer;
- the multilayer packaging material comprises a pre-cut layer selected from the group consisting of PA, PS, PET, PP, PE and paper;
- the uncut thickness of the pre-cut layers is lower than 25µm, preferably lower than 20µm, preferably lower than 18µm and preferably lower than 15µm;
- the material comprises a structure selected from the group consisting of heat-seal lacquer/PET/print layer/PE, OPP/print layer/PE, OPP/print layer/OPP, print layer/OPP/metalized-OPP/cold-seal layer and print layer/OPP/cold-seat layer.

The present invention further discloses a process for pre-cutting a multilayer packaging film according to the invention comprising the following subsequent steps:
- providing a multilayer material;
- die-cutting said multilayer material to a depth where only one layer remains partially uncut, said cutting operation being performed by rotary die-cutting between a die plate or a die-cutting cylinder and a pressure cylinder leaving a gap open substantially corresponding to the uncut thickness of said multilayer material.

A particular embodiment of the process of the present invention also discloses that the rotary die-cutting is performed via a flexible die-cutting plate arranged on a magnetic cylinder.

The present invention further discloses a form fill and seal packaging comprising a pre-cut multilayer packaging material according to the invention.

### Brief Description of the Drawings

Fig. 1 represents the principle by which the pre-cut multilayer packaging material of the present invention is obtained. A cutting device is opposed to a pressure cylinder, leaving a gap where the packaging material is not cut. In the example of this figure, the "uncut gap" represents 15µm but uncut gaps as small as 5µm are possible.

Fig. 2 represents an illustrative example of a PET/adh./PE laminate with an uncut thickness of 18µm and a cutting depth of 23µm.

Fig. 3 represents an illustrative example of an OPP/adh./OPP laminate with an uncut thickness of 18µm and a cutting depth of 26µm.

Fig. 4 represents an illustrative example of an OPP/print combination with an uncut thickness of 18µm and a cutting depth of 22µm.

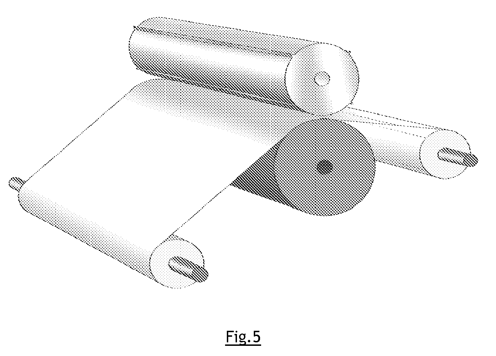

Fig. 5 represents one possible principle of the manufacturing process of the pre-cut multilayer packaging material of the present invention. The material is cut between a roll-cutter system (flexible die plate on magnetic cylinder or a die-cutting cylinder) and a pressure cylinder leaving a gap substantially representing the uncut thickness of the multilayer film (rotary die-cutting).

### Detailed Description of the Invention

Various lamination structures in various optical options are possible. Non-limitative examples are white, transparent, and metalized versions of the multilayer material according to the present invention.

Illustrative general structures of the pre-cut packaging material of the present invention are the following:
**1. "Mono"-layer with cold-seal (HFFS tt VFFS, cold-seal application)**

| | |
|---|---|
| General structure: | release lacquer-print/BOPP-cold seal |
| Thickness: | 15µm to 60µm |
| Density: | 0.53 to 0.98g/cm³ |

**2. "Duplex"-structures with cold-seal (HFFS tt VFFS, cold-seal application)**

| | |
|---|---|
| General structure: | RL-PET/print/adh./BOPP-CS |
| | RL-BOPP/print/adh./BOPP-CS |
| | BOPP/print/adh./BOPP-CS |
| Thickness of single BOPP: | 5µm to 50µm |
| Density: | 0.53 to 0.98g/cm³ |

**3. "Mono"-layer (HFFS tt VFFS, heat-seal application)**

| | |
|---|---|
| General structure: | print/BOPP or print/PE |
| Thickness of single BOPP: | 15µm to 90µm |
| Density: | 0.53 to 1.00g/cm³ |

**4. "Duplex"-structures (VFFS tt HFFS, heat-seal application)**
BOPP(15µm to 40µm)//print/adh./BOPP (15µm to 40µm)
BOPP(15µm to 40µm)/print/adh./PE (30µm to 90µm)
BOPP(15µm to 40µm)/print/adh./PP (30µm to 90µm)
OPET(10µm to 60µm) /print/adh./PE (30µm to 90µm)
OPET(10µm to 60µm) /print/adh./PP (30µm to 90µm)
OPET(10µm to 60µm) /print/adh./BOPP (15µm to 40µm)

### Examples

The examples were performed with the following process parameters:
- Cutting die: flexible die plate on magnetic cylinder
- Circumference: 304.8mm
- Width of plate: 400mm
- Angle of the die cutter: 60°
- Height of plate: 331 to 479µm
- Clearance: 480µm (fixed space between magnetic cylinder and pressure cylinder)
- Remaining uncut base film: < 25µm (gap between clearance and cutting plate)
- Pressure: 50 to 1500PSI (depending on the film sample to be cut)
The tear strength was measured on an uncut sample and then on the pre-cut sample according to the invention and in accordance with the DIN EN ISO 527-1 and DIN EN ISO 527-3 method.

### Example 1

### Structure:

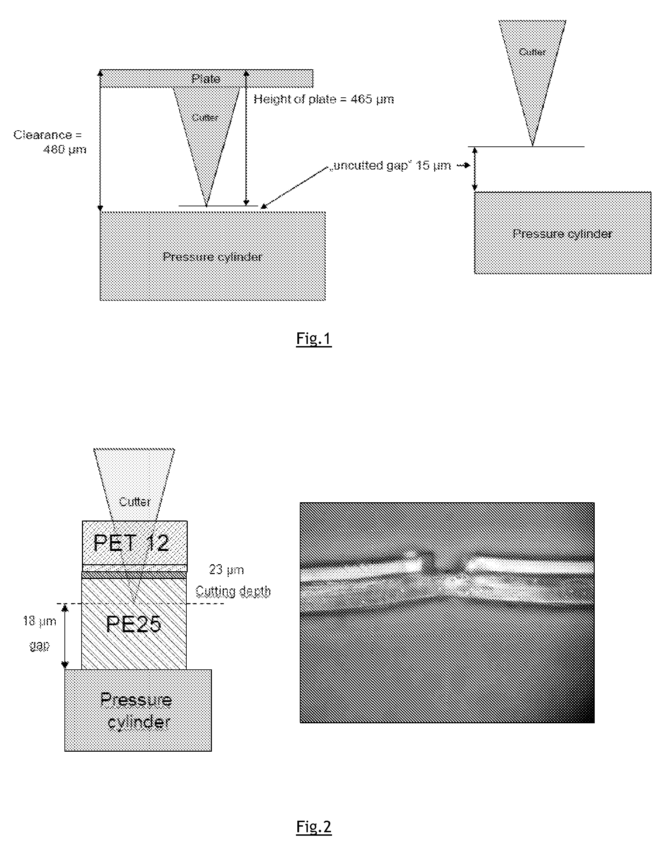

Heat-seat lacquer/PET 12µm/print layer/PE 25µm (represented in figure 2)
Width: 130mm
Cut-off: 170mm
Trial Parameters:
- Height of die-cutting plate = 462µm (18µm uncut gap)
- Pressure = 500 PSI (Std.)
- Speed = 180m/min
Test results on the pre-cut film:
**Film stability (tensile strength):**
- Uncut: 40.34MPa
- With pre-cut according to the invention: 23.4MPa

### Example 2

### Structure:

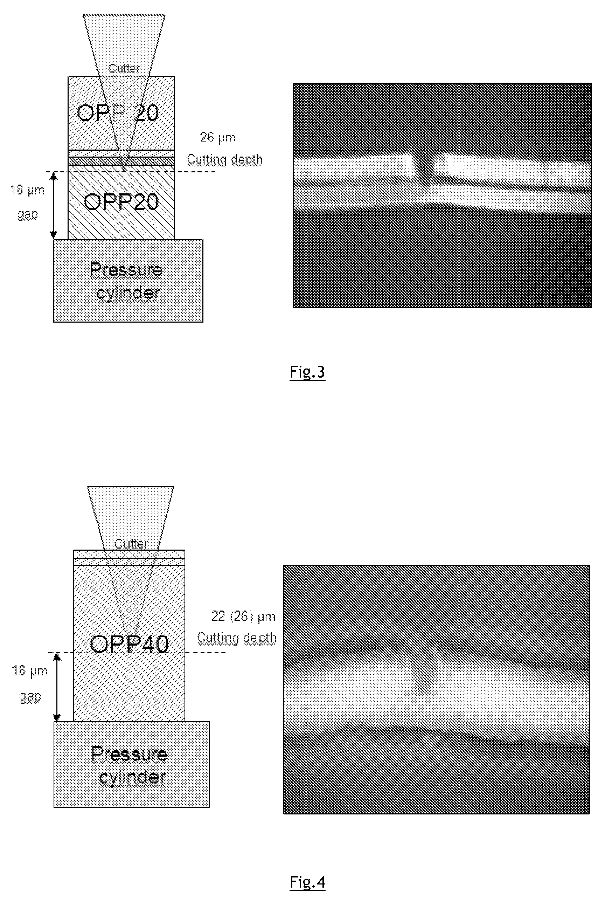

OPP 20µm/adh./print/OPP 20µm (represented in figure 3)
Width: 300mm
Cut-off: 200mm
Trial Parameters:
- Height of die-cutting plate = 462µm (18µm uncut gap)
- Pressure = 1500 PSI (Std.)
- Speed = 180m/min
Test results on the pre-cut film:
**Film stability (tensile strength):**
- Uncut: 52.9MPa
- With pre-cut according to the invention: 25.2MPa

### Example 3

### Structure:

print layer/OPP 20µm/metalized OPP 15µm cold-seat
Width: 105mm
Cut-off: 130mm
Trial Parameters:
- Height of die-cutting plate = 462µm (18µm uncut gap)
- Pressure = 1000 PSI (Std.)
- Speed = 120m/min
Test results on the pre-cut film:
**Film stability (tensile strength):**
- Uncut: 35.9MPa
- With pre-cut according to the invention: 19.7MPa

### Example 4

### Structure:

print layer/OPP 40-CS (represented in figure 4)
Width: 66mm
Cut-off: 147mm
Trial Parameters:
- Height of die-cutting plate = 462 µm (18µm uncut gap)
- Pressure = 1000 PSI (Std.)
- Speed = 100 m/min
Test results on the pre-cut film:
**Film stability (tensile strength):**
- Uncut: 31.9MPa
- With pre-cut according to the invention: 21.0MPa

## Claims

1. Pre-cut multilayer packaging material comprising a plurality of successive, entirely cut layers with the exception of one layer, said layer being only partially cut.

2. Pre-cut multilayer packaging material according to Claim 1, wherein the tensile strength of the multilayer packaging material measured according to DIN EN ISO 527-1 and DIN EN ISO 527-3 is at least 25% lower than the tensile strength of the corresponding uncut multilayer packaging material.

3. Pre-cut multilayer packaging material according to any of the previous claims, wherein the multilayer packaging material is a laminate comprising at least one seal layer.

4. Pre-cut multilayer packaging material according to any of the previous claims, wherein the multilayer packaging material comprises at least one printing layer.

5. Pre-cut multilayer packaging material according to any of the previous claims, wherein the multilayer packaging material comprises at least one aluminium layer.

6. Pre-cut multilayer packaging material according to any of the previous claims wherein the multilayer packaging material comprises a pre-cut layer selected from the group consisting of PA, PS, PET, PP, PE and paper.

7. Pre-cut multilayer packaging material according to any of the previous claims, wherein the uncut thickness of the pre-cut layers is lower than 25µm, preferably lower than 20µm, preferably lower than 18µm and preferably lower than 15µm.

8. Pre-cut multilayer packaging material according to any of the previous claims, wherein the material comprises a structure selected from the group consisting of heat seal lacquer/PET/print layer/PE, OPP/print layer/PE, OPP/print layer/OPP, print layer/OPP/metalized-OPP/cold-seal layer and print layer/OPP/cold-seal layer.

9. Process for pre-cutting a multilayer packaging film according to any of the previous claims comprising the following subsequent steps:
- providing a multilayer material;
- die cutting said multilayer material to a depth where only one layer remains partially uncut, said cutting operation being performed by rotary die-cutting between a die plate or a die-cutting cylinder and a pressure cylinder leaving a gap open substantially corresponding to the uncut thickness of said multilayer material.

10. Process according to Claim 9, wherein the rotary die-cutting is performed via a flexible die-cutting plate arranged on a magnetic cylinder.

11. Form fill and seal packaging comprising a pre-cut multilayer packaging material according to any of the previous Claims 1 to 10.
